# EUROPÄISCHE PATENTSCHRIFT

(11) **EP 3 948 512 B1**
(45) Veröffentlichungstag und Bekanntmachung des Hinweises auf die Patenterteilung: **27.05.2026**
(21) Anmeldenummer: 20721491.7
(22) Anmeldetag: 21.04.2020
(51) Int. Cl.: G06F 3/147, H04N 7/18

(54) **VORRICHTUNG ZUR VALIDIERBAREN AUSGABE VON BILDERN**
DEVICE ENABLING VALIDATION OF THE OUTPUT OF IMAGES
DISPOSITIF POUR VALIDER L'AFFICHAGE DES IMAGES

(30) Priorität: 30.04.2019 DE 102019111178
(43) Veröffentlichungstag der Anmeldung: 09.02.2022
(73) Patentinhaber: Rheinmetall Electronics GmbH, 28309 Bremen (DE)
(72) Erfinder: LIEDTKE, Bernd, 27801 Dötlingen (DE); EHLERS, Stefan, 28359 Bremen (DE)
(74) Vertreter: HKW Intellectual Property PartG mbB
(86) Internationale Anmeldenummer: PCT/EP2020/061066
(87) Internationale Veröffentlichungsnummer: WO 2020/221621

(56) Entgegenhaltungen:
- EP-A1- 3 319 315
- WO-A1-2017/140456
- DE-A1- 102014 213 456
- US-A1- 2016 098 957

## Beschreibung

Die vorliegende Erfindung betrifft eine Vorrichtung zur validierbaren Ausgabe von Bildern einer oder mehrerer Kameras auf einem Bildschirm. Des Weiteren betrifft die vorliegende Erfindung ein Fahrzeug mit einer solchen Vorrichtung zur validierbaren Ausgabe von Bildern einer oder mehrerer Kameras auf einem Bildschirm.

Beispielsweise bei militärischen Fahrzeugen, wie Panzern, kommen Vorrichtungen zur Ausgabe von Bildern zum Einsatz, welche an der Außenhaut des Fahrzeugs angeordnete Kameras und zumindest einen in dem Innenraum des Fahrzeugs angeordneten Bildschirm zur Ausgabe der von den Kameras aufgenommenen Bildern aufweisen. Dabei ist ein Multiplexer zwischen den Kameras und dem Bildschirm gekoppelt, welcher die Bilder einer ausgewählten Kamera aus der Menge der gekoppelten Kameras für den Bildschirm bereitstellt.

Dabei ist es möglich, dass eine an der Außenhaut des Fahrzeugs angeordnete Kamera ein Standbild liefert, das heißt eingefroren ist, und der Benutzer innerhalb des Fahrzeugs keine Möglichkeit hat, dies zu bemerken.

Eine besonders hohe Gefährdung ergibt sich, wenn die Kamera beispielsweise mit einer Waffenstation verknüpft ist und das auf dem Bildschirm angezeigte Bild für das Schießen auf Sicht benutzt wird.

Dabei ist bemerkenswert, dass sich die Bildverzögerungszeit für die Darstellung eines Videobildes, z. B. auf einem LCD-Display oder auf einem TFT-Display, technologiebedingt bei unterschiedlichen Umweltbedingungen verändert, insbesondere bei unterschiedlichen Temperaturen. Während bei Raumtemperatur ein Videobild sehr schnell und flüssig durch das Display dargestellt wird, kommt es bei negativen Temperaturen zu einer deutlich trägeren Darstellung, bis hin zu einem Verschmieren des Videobilds bei bewegten Bildern. Weitere Beispiele für ein Fehlermuster oder Fehlerbild neben dem Standbild sind ein verzögertes Bild sowie eine falsche Sicht, d. h. die Darstellung einer falschen Kamera.

Die Druckschrift EP 3 319 315 A1 offenbart, dass mehrere Videokameras Bilder als Analog- oder Digitalsignale liefern. Diese Bilder werden in einem Speicher abgespeichert. Die abgespeicherten Bilder werden zu einem gemeinsamen Bild zusammengesetzt, welches in ein Analog- oder Digitalsignal konvertiert und einem Monitor zugeführt wird. Um zu verhindern, dass veraltete Bilder angezeigt werden, werden alle Videobilder mit einem Zeitstempel versehen, der zusammen mit den Videobildern im Speicher abgespeichert wird. Wenn danach die abgespeicherten Bilder zusammengesetzt und in ein Analog- oder Digitalsignal konvertiert werden, werden die Zeitstempel der Videobilder ausgelesen und mit der aktuellen Zeit verglichen. Nur wenn der Zeitstempel maximal eine vorgegebene Zeitspanne zurückliegt, wird das Signal dem Monitor zugeführt. Weiter ist es zweckmäßig, wenn die Signale mit einem Identifizierungscode versehen werden, sodass überprüft werden kann, ob das dem Monitor zugeführte Signal von der richtigen Videokamera stammt.

Ferner offenbart die Druckschrift DE 10 2014 213456 A1 ein System zum Übertragen eines eine optische Information aufweisenden Signals von einer Aufnahmeeinrichtung zu einer Ausgabeeinrichtung und zum Überwachen der Übertragung des Signals. Dafür weist das System eine Aufnahmeeinrichtung, eine Signalübertragungseinrichtung und eine Ausgabeeinrichtung auf. Für die Überwachung der Signalübertragung weist das System eine Signalüberwachungseinrichtung auf, die wiederum eine Referenzsignalerzeugungseinrichtung zum Erzeugen eines Referenzsignals in dem von der Aufnahmeeinrichtung erzeugten Signal aufweist. Ferner umfasst die Signalüberwachungseinrichtung eine Erfassungseinrichtung zum Erfassen zumindest eines Teils eines zur Ausgabeeinrichtung übertragenen Signals und/oder zumindest eines Teils des von der Ausgabeeinrichtung ausgegebenen Signals. Außerdem ist eine Überwachungseinrichtung der Signalüberwachungseinrichtung dazu ausgeführt, zu überwachen, ob das von der Erfassungseinrichtung erfasst wurde.

Darüber hinaus offenbart die Druckschrift WO 2017/140456 A1 eine Vorrichtung sowie ein Verfahren zum Überwachen eines räumlichen Bereichs, insbesondere in der Umgebung oder innerhalb eines Fahrzeugs, vorzugsweise eines Schienenfahrzeugs. Die Vorrichtung umfasst eine Erfassungseinrichtung zum Erfassen des räumlichen Bereichs, welche ausgebildet ist, eine Bilderserie zu erzeugen, wobei Bilder der Bilderserie für den räumlichen Bereich jeweils zu einem Zeitpunkt des Erfassens repräsentativ sind, eine Anzeigeeinrichtung zum Anzeigen der erzeugten Bilderserie und ein dynamisches Mittel, welches ausgebildet ist, eine optisch wahrnehmbare zeitliche Änderung zu erzeugen, wobei die Erfassungseinrichtung ausgebildet ist, derart mit dem dynamischen Mittel zusammenzuwirken, dass die Bilder jeweils einen Zustand der zeitlichen Änderung enthalten.

Weiterer Stand der Technik wird durch die Druckschrift US 2016/098957 A1 gebildet.

Vor diesem Hintergrund besteht eine Aufgabe der vorliegenden Erfindung darin, eine Lösung zur validierbaren Ausgabe von Bildern zu schaffen.

Die Erfindung ist im unabhängigen Anspruch definiert. Bevorzugte Ausführungsformen sind in den abhängigen Ansprüchen definiert.

Gemäß einem ersten Aspekt wird eine Vorrichtung zur validierbaren Ausgabe von Bildern vorgeschlagen, welche aufweist:
einen Bildschirm zur Ausgabe von Bildern basierend auf Bilddaten, eine Anzahl N1 von Kameras, mit N1 ≥ 1, wobei eine jede der Kameras zur Bereitstellung von Bilddaten basierend auf einer Aufnahme von Kamera-Bildern eingerichtet ist,
eine Integrations-Einheit zur Ausgabe von erweiterten Bilddaten basierend auf einer Integration einer in den von dem Bildschirm ausgegebenen Bildern sichtbaren Signatur in die von einer der Kameras bereitgestellten Bilddaten,
**eine Anzahl** N2 von vor dem Bildschirm angeordneten Photosensoren, mit N2 ≥ 1, wobei die N2 Photosensoren dazu eingerichtet sind, die integrierte Signatur in den von dem Bildschirm ausgegebenen Bildern zu detektieren, und
eine mit den N2 Photosensoren gekoppelten Validierungs-Einheit, welche dazu eingerichtet ist, die detektierte Signatur zu validieren und in Abhängigkeit der validierten Signatur eine Sicherheitsfunktion auszulösen.

In Abhängigkeit der validierten Signatur, detektiert von zumindest einem der Photosensoren und validiert durch die Validierungs-Einheit, kann die vorliegende Vorrichtung, ein Teil der Vorrichtung, z. B. der Bildschirm, und/oder eine mit der Vorrichtung gekoppelte Einrichtung, beispielsweise eine Fahrersicht oder eine Waffenstation, mittels der Sicherheitsfunktion in einen sicheren Zustand versetzt werden.

Wenn beispielsweise die Verzögerungszeit der Vorrichtung, insbesondere die Differenz zwischen der Detektion der Signatur durch den Photosensor und dem Einprägen oder Integrieren der Signatur in die bereitgestellten Bilddaten, beispielsweise aufgrund einer sehr niedrigen Umgebungstemperatur, größer als ein vorbestimmter Schwellwert ist, kann eine Sicherheitsfunktion durch die Validierungs-Einheit ausgelöst oder getriggert werden.

Durch die optische Detektion der Signatur durch die Anzahl der Photosensoren können Fehler bei der Darstellung durch den Bildschirm selbst erkannt werden.

Die Signatur kann auch als Stimulus oder eingebettete Bildinformation, eingebettet in die darzustellenden Bilder, bezeichnet werden.

Die Überwachung der zusätzlich eingebetteten Bildinformation kann für die Auslegung und Gestaltung einer jeweiligen Sicherheitsfunktion für alle drei oben genannten sicherheitskritischen Aspekte, Standbild, verzögertes Bild, falsche Sicht, angewendet werden. Insbesondere können mittels der integrierten Signatur oder eingebetteten Bildinformation die Fehlermuster des verzögerten Bildes, des Standbildes und der falschen Sicht sensiert werden. Im Falle der Sensierung eines solchen Fehlermusters kann eine Sicherheitsfunktion ausgelöst werden.

Beispiele für eine solche Sicherheitsfunktion umfassen ein Ausgeben einer Meldung an einen Benutzer (visuell und/oder akustisch und/oder haptisch), ein Abschalten des Bildschirms und/oder ein Verblocken einer mit der Vorrichtung gekoppelten Waffenstation oder Waffe.

Die Vorrichtung kann auch als Sichtsystem bezeichnet werden. Die jeweilige Kamera kann beispielsweise als Videokamera, als Tagsichtkamera, als Wärmebildkamera, als Infrarot-Kamera oder als Fotokamera ausgebildet sein. Insbesondere können die Kameras unterschiedliche Kameratypen umfassen. Der Photosensor kann auch als Photodetektor, als Bildsensor oder als optischer Detektor bezeichnet werden.

Der Bildschirm kann beispielsweise als ein in einem Fahrzeuginnenraum eines militärischen Fahrzeugs angeordneter Flachbildschirm ausgebildet sein. Der Bildschirm kann auch als Monitor oder Display bezeichnet werden. Das Display kann ein LCD-Display oder ein TFT-Display oder eine optische Anzeige, beispielsweise bestehend aus einer oder mehreren LEDs, sein.

Insbesondere ist eine Bildverarbeitungs-Einheit oder Steuer-Einheit vorgesehen, welche dazu eingerichtet ist, die Integrations-Einheit sowie den Bildschirm zu steuern. Die Bildverarbeitungs-Einheit umfasst beispielsweise eine Elektronik, wie einen Mikroprozessor oder eine CPLD (CPLD; Complex Programmable Logic Device) oder einen FPGA.

Gemäß dem ersten Aspekt ist die Validierungs-Einheit dazu eingerichtet, eine Zeitdifferenz zwischen einem zweiten Zeitpunkt der Detektion der Signatur durch die N2 Photosensoren und einem ersten Zeitpunkt der Integration der Signatur in die bereitgestellten Bilddaten zu ermitteln und die Sicherheitsfunktion auszulösen, falls die ermittelte Zeitdifferenz größer als ein vorbestimmter Schwellwert ist.

Es können auch verschiedene Schwellwerte Verwendung finden, um verschiedene Fehlerbilder, beispielsweise ein verzögertes Bild oder ein Standbild, zu differenzieren. In Abhängigkeit der Validierung der detektierten Signatur, und insbesondere in Abhängigkeit der verwendeten verschiedenen Schwellwerte, können von der Validierungs-Einheit auch unterschiedliche Sicherheitsfunktionen ausgelöst werden.

Gemäß einer weiteren Ausführungsform ist die Validierungs-Einheit dazu eingerichtet, in Abhängigkeit der ermittelten Zeitdifferenz, insbesondere unter Verwendung verschiedener Schwellwerte, unterschiedliche Fehler oder Fehlermuster zu detektieren bzw. zu differenzieren. Die unterschiedlichen Fehlermuster umfassen beispielsweise "verzögertes Bild", "Standbild" und "falsche Sicht".

Beispielsweise kann bei Erreichen einer maximal zulässigen Verzögerungszeit eine Sicherheitsfunktion greifen, die dem Benutzer die Grenzüberschreitung für den Fehlerfall "verzögertes Bild" signalisiert und die Vorrichtung zuverlässig in einen sicheren Zustand versetzt, zumindest bis die aktuelle Verzögerungszeit die maximal zulässige Verzögerungszeit wieder unterschritten hat.

Des Weiteren kann auch ein Trigger zur Angabe des ersten Zeitpunkts der Integration der Signatur von der Integrations-Einheit an die Validierungs-Einheit direkt übermittelt werden. Als Trigger kann auch die Signatur selbst verwendet werden. Sollte nach dem Erhalt des Triggers durch die Validierungs-Einheit keine zu erwartende Änderung auf dem Bildschirm über die Photosensoren erkannt werden, so ist von dem Fehlerfall "Standbild" auszugehen, und das System kann in den sicheren Zustand versetzt werden.

Gemäß dem ersten Aspekt ist die Signatur als eine codierte Signatur ausgebildet, welche einen für die Integration der Signatur in die bereitgestellten Bilddaten spezifischen Zeitstempel zur Angabe des ersten Zeitpunkts umfasst.

Damit gibt der Zeitstempel den ersten Zeitpunkt der Integration der Signatur in die bereitgestellten Bilddaten an.

Gemäß dem ersten Aspekt ist die Signatur als eine codierte Signatur ausgebildet, welche einen für die Integration der Signatur in die bereitgestellten Bilddaten spezifischen Zeitstempel zur Angabe des ersten Zeitpunkts und eine für die die Bilddaten bereitstellende Kamera spezifische Quellen-Angabe umfasst.

Die Quellen-Angabe als Teil der codierten Signatur und damit als Teil der erweiterten Bilddaten ist dazu geeignet, die die Bilddaten bereitstellende Kamera anzugeben. Dabei kann die Quellen-Angabe auch als Identifikations-Information oder ID oder Source-ID bezeichnet werden. Die Quellen-Angabe wird vorzugsweise auf Basis einer Hardware-ID der Kamera erzeugt.

Gemäß einer weiteren Ausführungsform ist der jeweilige Photosensor dazu eingerichtet, einen vorbestimmten Ausgabebereich des Bildschirms mit einer MxN Pixelfläche zur Detektion der Signatur zu überwachen.

Dabei bezeichnet M eine Anzahl von Zeilen und N eine Anzahl von Spalten des Ausgabebereichs oder des Teils des Ausgabebereichs des Bildschirms, auf welchem die Signatur ausgegeben wird. Der Ausgabebereich ist insbesondere am Rand oder an einer Ecke des Bildschirms, so dass der zentrale Bereich des Bildschirms weiterhin für die Ausgaben an den Benutzer zur Verfügung steht.

Gemäß einer weiteren Ausführungsform weisen die Pixel der MxN Pixelfläche des Ausgabebereichs zur Ausbildung der sichtbaren Signatur eine definierte Helligkeit, insbesondere eine definierte und identische Helligkeit, auf.

Gemäß einer weiteren Ausführungsform bilden die Pixel der MxN Pixelfläche des Ausgabebereichs zur Ausbildung der sichtbaren Signatur ein vorbestimmtes Pattern aus.

Das vorbestimmte Pattern kann auch als Muster bezeichnet werden. In dem Pattern können verschiedene Informationen codiert sein, welche von der Validierungs-Einheit ausgewertet werden und zur Validierung bzw. zur Wahl der geeigneten Sicherheitsfunktion herangezogen werden.

Das Pattern kann auch als Video-Pattern ausgebildet sein. Für das Beispiel der Verwendung von vier unterschiedlichen Kameras kann ein jeweiliges Kameraspezifisches Video-Pattern der jeweiligen Kamera zugeordnet werden und ortsspezifisch, z. B. in den vier Ecken des Bildschirms, ausgegeben werden und entsprechend detektiert werden. Hierdurch kann auch der Fehlerfall "falsche Sicht" mittels der vier Photosensoren und der nachgeschalteten Validierungs-Einheit erkannt werden.

Gemäß einer weiteren Ausführungsform sind vier Photosensoren vorgesehen, mit N2 = 4, wobei der jeweilige von einem der vier Photosensoren überwachte Ausgabebereich in einer der vier Ecken des Bildschirms liegt.

Hierbei befinden sich die Ausgabebereiche in den vier Ecken des Bildschirms, und entsprechend sind die vier Photosensoren vor diesen vier Ecken des Bildschirms angeordnet, so dass der zentrale Bereich des Bildschirms weiterhin für die Ausgabe der Bilder der Kameras und damit für den Benutzer vorgesehen ist.

Durch die Verwendung von vier Photosensoren, jeweils angeordnet in einer Ecke des Bildschirms, können vier verschiedene Positionen auf dem Bildschirm beobachtet und ausgewertet werden. Für das Beispiel der Verwendung von vier unterschiedlichen Kameras kann eine jeweilige Kamera-spezifische eingebettete Bildinformation oben links, oben rechts, unten links und unten rechts eingeblendet werden. Somit kann, wie oben ausgeführt, auch der Fehlerfall "falsche Sicht" durch die Photosensoren und die nachgeschaltete Validierungs-Einheit erkannt werden. Wenn beispielsweise die Validierung ergibt, dass ein bestimmter Bildschirm zwar die Bilder einer Kamera A ausgeben soll, aber tatsächlich die Bilder einer Kamera B ausgibt, so kann als auszuführende Aktion die mit der Vorrichtung koppelbare Waffe verblockt werden.

Gemäß einer weiteren Ausführungsform ist eine Mehrzahl von Photosensoren vorgesehen, mit N2 ≥ 4. Dabei befinden sich die von den Photosensoren überwachten Ausgabebereiche in den vertikalen und/oder horizontalen Randbereichen des Bildschirms.

Gemäß dem ersten Aspekt ist eine Anzahl N3 von Temperatursensoren zur Messung einer jeweiligen Temperatur vorgesehen, mit N3 = N2. Dabei ist ein jeweiliger der Temperatursensoren vor dem Bildschirm und neben einem jeweiligen der Photosensoren angeordnet.

Gemäß einer weiteren Ausführungsform ist der jeweilige Temperatursensor dazu eingerichtet, eine Temperatur der MxN Pixelfläche des Ausgabebereichs des Bildschirms zu messen.

Gemäß einer weiteren Ausführungsform ist die Validierungs-Einheit dazu eingerichtet, die detektierte Signatur in Abhängigkeit der von den N3 Temperatursensoren gemessenen Temperaturen zu validieren.

Die Temperatursensoren sind insbesondere dazu eingerichtet, die Temperatur der jeweiligen aktiven Fläche, d. h. der jeweiligen MxN Pixelfläche des Ausgabebereichs, zu messen. Hieraus ergibt sich insbesondere auch eine Abhängigkeit der Verzögerungszeit bezogen auf die Display-Pixel-Temperatur. Diese Abhängigkeit kann zusätzlich zur Validierung der Verzögerungszeit genutzt werden. Des Weiteren kann mit denselben Temperatursensoren vorteilhafterweise eine Heizung des Displays gesteuert werden, welche den Bildschirm auf eine Soll-Temperatur regelt, bei welcher die Verzögerungszeit insbesondere unterhalb des vorgegebenen Schwellwerts oder Grenzwerts liegt und somit ein dauerhafter Betrieb des Bildschirms gewährleistet wird.

Gemäß einer weiteren Ausführungsform umfasst die Sicherheitsfunktion ein Ausgeben einer Meldung an einen Benutzer, ein Abschalten des Bildschirms und/oder ein Verblocken einer mit der Vorrichtung gekoppelten Waffe umfasst.

Gemäß einer weiteren Ausführungsform umfasst die Vorrichtung einen zwischen den N1 Kameras und dem Bildschirm geschalteten Übertragungskanal zum Übertragen der Bilddaten von den N1 Kameras zu dem Bildschirm, wobei die Integrations-Einheit vor dem Bildschirm in dem Übertragungskanal angeordnet ist.

Der Übertragungskanal zwischen den Kameras und dem Bildschirm umfasst insbesondere einen den Kameras nachgeschalteten Multiplexer, eine dem Multiplexer nachgeschaltete Bildverarbeitungs-Einheit und vorzugsweise auch die Integrations-Einheit und die Validierungs-Einheit. Alternativ können die Integrations-Einheit und die Validierungs-Einheit auch dem Bildschirm direkt zugeordnet sein oder Teil dieses sein.

Die verwendeten Schnittstellen in dem Übertragungskanal umfassen beispielsweise DVI und/oder Camera-Link und/oder eine drahtlose Schnittstelle, wie zum Beispiel WLAN.

Gemäß einer weiteren Ausführungsform umfasst die Vorrichtung eine Steuer-Vorrichtung, welche mit der Validierungs-Einheit gekoppelt ist.

Insbesondere ist die Steuer-Vorrichtung dazu eingerichtet, die mit der Vorrichtung koppelbare Waffe zu verblocken, falls die Validierung eine Anzeige eines Standbilds oder eine Anzeige eines Bildes einer falschen Kamera ("falsche Sicht") oder eine Anzeige eines stark verzögerten Bildes angibt.

Gemäß einer weiteren Ausführungsform ist die Steuer-Vorrichtung dazu eingerichtet, in Abhängigkeit der Validierung eine sichere Ausfall-Anzeige, welche einen Ausfall einer oder mehrerer der Kameras indiziert, anzusteuern.

Damit hat der Benutzer eine sichere Angabe darüber, dass eine bestimmte Kamera ausgefallen ist und vorzugsweise welche Kamera ausgefallen ist. Hierdurch wird die Sicherheit der gesamten Vorrichtung deutlich erhöht.

Die jeweilige Einheit, zum Beispiel die Integrations-Einheit oder die Validierungs-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder FPGA ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Des Weiteren wird ein Fahrzeug mit einer wie oben beschriebenen Vorrichtung zur validierbaren Ausgabe von Bildern vorgeschlagen, wobei die N1 Kameras an einer Außenhaut des Fahrzeugs und der Bildschirm in einem Raum des Fahrzeugs angeordnet sind.

Das Fahrzeug ist vorzugsweise ein militärisches Fahrzeug. Das Fahrzeug kann dabei ein Panzer, ein LKW, ein Sonderfahrzeug, wie zum Beispiel ein Kran, ein Lader oder ein Bagger, ein Schiff oder ein fliegendes System, wie eine Drohne oder ein Hubschrauber, sein.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegte Figur näher erläutert.
- Fig. 1: zeigt ein schematisches Blockschaltbild eines Ausführungsbeispiels einer Vorrichtung zur validierbaren Ausgabe von Bildern; und
- Fig. 2: zeigt ein schematisches Blockschaltbild eines Ausführungsbeispiels eines Bildschirms für eine Vorrichtung zur validierbaren Ausgabe von Bildern.

In den Figuren sind gleiche oder funktionsgleiche Segmente mit denselben Bezugszeichen versehen worden, sofern nichts anderes angegeben ist.

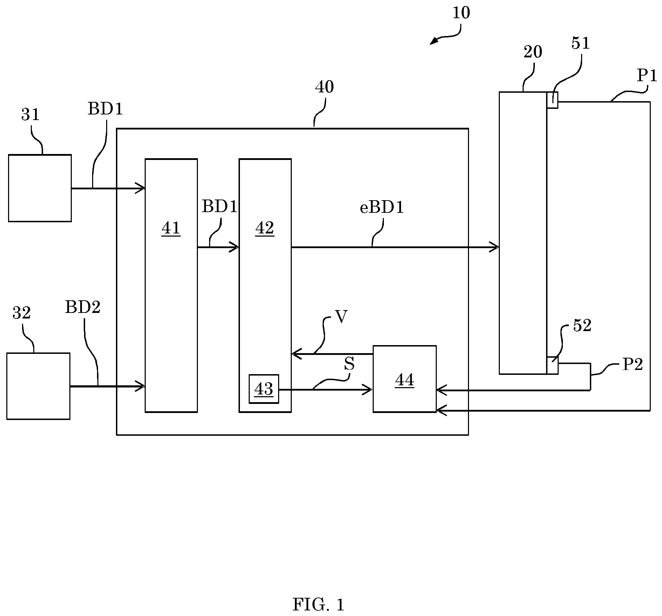

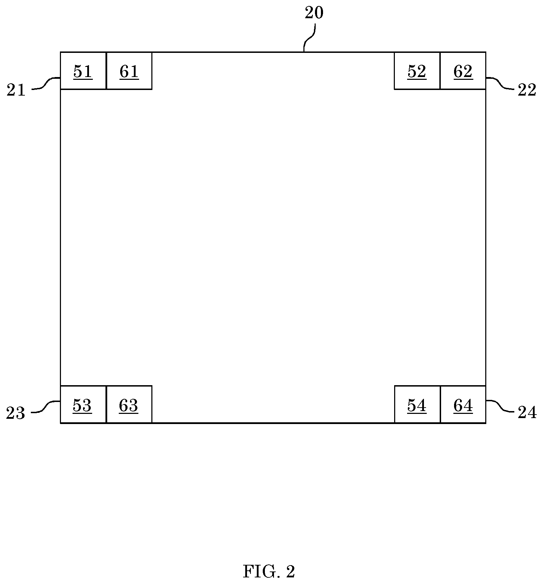

In Fig. 1 ist ein schematisches Blockschaltbild eines ersten Ausführungsbeispiels einer Vorrichtung 10 zur validierbaren Ausgabe von Bildern dargestellt. Hierzu zeigt die Fig. 2 ein schematisches Blockschaltbild eines Ausführungsbeispiels eines Bildschirms 20 für die Vorrichtung 10 der Fig. 1.

Die Vorrichtung 10 der Fig. 1 umfasst eine Anzahl N1 von Kameras 31, 32, einen Bildschirm 20 und einen zwischen den Kameras 31, 32 und dem Bildschirm 20 geschalteten Übertragungskanal 40. Ohne Einschränkung der Allgemeinheit zeigt das Ausführungsbeispiel der Fig. 1 zwei Kameras (N1 = 2). Ferner zeigt die Fig. 1 einen einzigen Bildschirm 20. Ohne Einschränkung der Allgemeinheit ist das Vorliegende auch auf eine Mehrzahl von Bildschirmen anwendbar.

Der Bildschirm 20 ist zur Ausgabe von Bildern basierend auf Bilddaten geeignet. Der Bildschirm 20 ist beispielsweise ein Display, vorzugsweise ein LCD-Display oder ein TFT-Display. Die jeweilige Kamera 31, 32 ist dazu eingerichtet, Bilddaten BD1, BD2 basierend auf einer Aufnahme von Kamerabildern auszugeben. Die Bilddaten BD1, BD2 werden an den Übertragungskanal 40 übertragen. Hierzu umfasst der Übertragungskanal 40 einen Multiplexer 41. Neben dem Multiplexer 41 umfasst der Übertragungskanal 40 gemäß dem Ausführungsbeispiel der Fig. 1 eine Bildverarbeitungs-Einheit 42, eine Integrations-Einheit 43 und eine Validierungs-Einheit 44. Ohne Einschränkung der Allgemeinheit kann der Übertragungskanal 40 noch weitere Einheiten umfassen.

Der Multiplexer 41 stellt ausgangsseitig eine der empfangenen Eingaben, vorliegend die Bilddaten BD1 der Kamera 31 oder die Bilddaten B2 der Kamera 32, bereit. In dem dargestellten Beispiel in der Fig. 1 stellt der Multiplexer 41 die Bilddaten BD1 der Kamera 31 ausgangsseitig der Bildverarbeitungs-Einheit 42 bereit. In dem vorliegenden Beispiel umfasst die Bildverarbeitungs-Einheit die Integrations-Einheit 43. Die Integrations-Einheit 43 ist zur Ausgabe von erweiterten Bilddaten eBD1 basierend auf eine Integration einer in den von dem Bildschirm 20 ausgegebenen Bildern sichtbaren Signatur S in die von der Kamera 31 ausgegebenen Bilddaten BD1 eingerichtet.

Des Weiteren umfasst die Vorrichtung 10 eine Anzahl N2 von vor dem Bildschirm 20 angeordneten Photosensoren 51, 52. In dem Beispiel der Fig. 1 sind zwei Photosensoren 51, 52 gezeigt. Ohne Einschränkung der Allgemeinheit kann eine größere Anzahl von Photosensoren verwendet werden. Beispielsweise zeigt die Fig. 2 ein Ausführungsbeispiel mit vier Photosensoren 51-54.

Die Photosensoren 51, 52 sind dazu eingerichtet, die integrierte Signatur S in den von dem Bildschirm 20 ausgegebenen Bildern zu detektieren. Entsprechend kann die Signatur S auch als eingebettete weitere Bildinformation bezeichnet werden.

Der jeweilige Photosensor 51-54 ist insbesondere dazu eingerichtet, einen vorbestimmten Ausgabebereich 21-24 (siehe Fig. 2) des Bildschirms 20 mit einer MxN Pixelfläche zur Detektion der Signatur S zu überwachen. Die Pixel der MxN Pixelfläche des Ausgabebereichs 21-24 weisen zur Ausbildung der sichtbaren Signatur S insbesondere eine definierte Helligkeit, vorzugsweise eine definierte und identische Helligkeit, auf. Alternativ können die Pixel der MxN Pixelfläche auch ein vorbestimmtes Pattern, beispielsweise ein Video-Pattern, welches vorzugsweise Kamera-spezifisch ist, ausbilden.

Des Weiteren illustriert die Fig. 1, dass die Photosensoren 51, 52 mit der Validierungs-Einheit 44 verbunden sind, so dass die Signale P1, P2 der Photosensoren 51, 52 an die Validierungs-Einheit 44 übertragen werden können. Die Signale P1, P2 der Photosensoren 51, 52 umfassen eine Information, welche indikativ für die detektierte Signatur S ist.

Die Validierungs-Einheit 44 ist dazu eingerichtet, die detektierte Signatur S insbesondere unter Verwendung der von den Photosensoren 51, 52 empfangenen Signale P1, P2 zu validieren und in Abhängigkeit der validierten Signatur S eine Sicherheitsfunktion auszulösen oder zu triggern. Hierzu kann die Validierungs-Einheit 44 auch ein in Abhängigkeit davon erzeugtes Validierungsergebnis V an die Bildverarbeitungs-Einheit 42 übermitteln, welche dann die getriggerte Sicherheitsfunktion ausführen kann.

Insbesondere ist die Validierungs-Einheit 44 dazu eingerichtet, eine Zeitdifferenz zwischen einem Zeitpunkt der Detektion der Signatur S durch die Photosensoren 51, 52 und einem ersten Zeitpunkt der Integration der Signatur S in die bereitgestellten Bilddaten BD1, BD2 zu ermitteln und die Sicherheitsfunktion auszulösen, falls die ermittelte Zeitdifferenz größer als ein vorbestimmter Schwellwert ist.

Hierzu kann, wie in Fig. 1 dargestellt, die Integrations-Einheit 43 die Signatur S insbesondere zu dem ersten Zeitpunkt an die Validierungs-Einheit 44 übermitteln. Alternativ kann ein einfaches Trigger-Signal verwendet werden, welches zu dem ersten Zeitpunkt von der Integrations-Einheit 43 an die Validierungs-Einheit 44 übertragen wird.

Des Weiteren kann die Signatur S auch als eine codierte Signatur ausgebildet sein, welche einen für die Integration der Signatur S in die bereitgestellten Bilddaten BD1 spezifischen Zeitstempel zur Angabe des ersten Zeitpunkts umfasst.

Des Weiteren kann die codierte Signatur auch eine für die die Bilddaten BD1 bereitstellende Kamera 31 spezifische Quellen-Angabe umfassen.

Die Sicherheitsfunktion, welche von der Validierungs-Einheit 44 ausgelöst oder getriggert werden kann, kann beispielsweise ein Ausgeben einer Meldung an einen Benutzer, ein Abschalten des Bildschirms 20 und/oder ein Verblocken einer mit der Vorrichtung 10 gekoppelten Waffe oder Waffenstation umfassen.

Wie oben bereits ausgeführt, zeigt die Fig. 2 ein Ausführungsbeispiel eines Bildschirms 20 für die Vorrichtung 10 der Fig. 1 mit vier Ausgabebereichen 21-24, wobei der jeweilige Ausgabebereich 21-24 in einer der vier Ecken des Bildschirms 20 angeordnet ist, und vier entsprechend angeordneten Photosensoren 51-54.

So ist der Photosensor 51 in dem Ausgabebereich 21 angeordnet (oben links in dem Bildschirm 20) und der Photosensor 52 ist in dem Ausgabebereich 22 angeordnet (oben rechts in dem Bildschirm 20). Weiter ist der Photosensor 53 in dem Ausgabebereich 23 angeordnet (unten links in dem Bildschirm 20) und der Photosensor 54 ist in dem Ausgabebereich 24 (unten rechts in dem Bildschirm 20) angeordnet.

In dem Ausführungsbeispiel der Fig. 2 sind auch vier Temperatursensoren 61-64 vorgesehen. Dabei ist ein jeweiliger der Temperatursensoren 61-64 vor dem Bildschirm 20 neben einem jeweiligen der Photosensoren 51-54 angeordnet. Der jeweilige Temperatursensor 61-64 ist dazu eingerichtet, eine Temperatur des jeweiligen Ausgabebereichs 21-24 des Bildschirms 20 zu messen. In diesem Fall kann die Validierungs-Einheit 44 auch die von den Temperatursensoren 61-64 gemessenen Temperaturen für die Validierung verwenden.

Obwohl die vorliegende Erfindung anhand von Ausführungsbeispielen beschrieben wurde, ist sie vielfältig modifizierbar.

### BEZUGSZEICHENLISTE

- 10: Vorrichtung
- 20: Bildschirm
- 21: Ausgabebereich
- 22: Ausgabebereich
- 23: Ausgabebereich
- 24: Ausgabebereich
- 31: Kamera
- 32: Kamera
- 40: Übertragungskanal
- 41: Multiplexer
- 42: Bildverarbeitungs-Einheit
- 43: Integrations-Einheit
- 44: Validierungs-Einheit
- 51: Photosensor
- 52: Photosensor
- 53: Photosensor
- 54: Photosensor
- 61: Temperatursensor
- 62: Temperatursensor
- 63: Temperatursensor
- 64: Temperatursensor
- BD1: Bilddaten
- BD2: Bilddaten
- eBD1: erweiterte Bilddaten
- P1: Signal des Photosensors
- P2: Signal des Photosensors
- S: Signatur
- V: Validierungsergebnis

## Patentansprüche

1. Vorrichtung (10) zur validierbaren Ausgabe von Bildern, mit:
einem Bildschirm (20) zur Ausgabe von Bildern basierend auf erweiterten Bilddaten,
einer Anzahl N1 von Kameras (31, 32), mit N1 ≥ 1, wobei eine jede der Kameras (31, 32) zur Bereitstellung von Bilddaten (BD1, BD2) basierend auf einer Aufnahme von Kamera-Bildern eingerichtet ist,
einer Integrations-Einheit (43) zur Ausgabe von erweiterten Bilddaten (eBD1, eBD2) basierend auf einer Integration einer in den von dem Bildschirm (20) ausgegebenen Bildern sichtbaren Signatur (S) in die von einer der Kameras (31, 32) bereitgestellten Bilddaten (BD1, BD2),
einer Anzahl N2 von vor dem Bildschirm (20) angeordneten Photosensoren (51-54), mit N2 ≥ 1, wobei die N2 Photosensoren (51-54) dazu eingerichtet sind, die integrierte Signatur (S) in den von dem Bildschirm (20) ausgegebenen Bildern zu detektieren, und
einer mit den N2 Photosensoren (51-54) gekoppelten Validierungs-Einheit (44), welche dazu eingerichtet ist, die detektierte Signatur (S) zu validieren und in Abhängigkeit der validierten Signatur eine Sicherheitsfunktion auszulösen, wobei die Validierungs-Einheit (44) dazu eingerichtet ist, eine Zeitdifferenz zwischen einem zweiten Zeitpunkt der Detektion der Signatur (S) durch die N2 Photosensoren (51-54) und einem ersten Zeitpunkt der Integration der Signatur (S) in die bereitgestellten Bilddaten (BD1, BD2) zu ermitteln und die Sicherheitsfunktion auszulösen, falls die ermittelte Zeitdifferenz größer als ein vorbestimmter Schwellwert ist, wobei die Signatur (S) als eine codierte Signatur ausgebildet ist, welche einen für die Integration der Signatur (S) in die bereitgestellten Bilddaten (BD1, BD2) spezifischen Zeitstempel zur Angabe des ersten Zeitpunkts und eine für die die Bilddaten (BD1, BD2) bereitstellende Kamera(31, 32) spezifische Quellen-Angabe umfasst,
wobei eine Anzahl N3 von Temperatursensoren (61-64) zur Messung einer jeweiligen Temperatur vorgesehen ist, mit N3 = N2, wobei ein jeweiliger der Temperatursensoren (61-64) vor dem Bildschirm (20) und neben einem jeweiligen der Photosensoren (51-54) angeordnet ist,
wobei die Validierungs-Einheit (44) dazu eingerichtet ist, die detektierte Signatur (S) in Abhängigkeit der von den N3 Temperatursensoren (61-64) gemessenen Temperaturen zu validieren, und/oder wobei die Temperatursensoren (61-64) dazu eingerichtet sind, eine Heizung des Bildschirms (20) zu steuern, welche den Bildschirm (20) auf eine Soll-Temperatur regelt.

2. Vorrichtung nach Anspruch 1,
**dadurch gekennzeichnet,**
**dass** der jeweilige Photosensor (51-54) dazu eingerichtet ist, einen vorbestimmten Ausgabebereich (21-24) des Bildschirms (20) mit einer MxN Pixelfläche zur Detektion der Signatur (S) zu überwachen.

3. Vorrichtung nach Anspruch 2,
**dadurch gekennzeichnet,**
**dass** die Pixel der MxN Pixelfläche des Ausgabebereichs (21-24) zur Ausbildung der sichtbaren Signatur (S) eine definierte Helligkeit aufweisen.

4. Vorrichtung nach Anspruch 2,
**dadurch gekennzeichnet,**
**dass** die Pixel der MxN Pixelfläche des Ausgabebereichs (21-24) zur Ausbildung der sichtbaren Signatur (S) ein vorbestimmtes Pattern ausbilden.

5. Vorrichtung nach einem der Anspruch 2 bis 4,
**dadurch gekennzeichnet,**
**dass** vier Photosensoren (51-54) vorgesehen sind, mit N2 = 4, wobei der jeweilige von einem der vier Photosensoren (51-54) überwachte Ausgabebereich (21-24) in einer der vier Ecken des Bildschirms (20) liegt.

6. Vorrichtung nach einem der Anspruch 2 bis 4,
**dadurch gekennzeichnet,**
**dass** eine Mehrzahl von Photosensoren (51-54) vorgesehen ist, mit N2 ≥ 4, wobei die von den Photosensoren (51-54) überwachten Ausgabebereiche (21-24) in den vertikalen und/oder horizontalen Randbereichen des Bildschirms (20) liegen.

7. Vorrichtung nach Anspruch 1,
**dadurch gekennzeichnet,**
**dass** der jeweilige Temperatursensor (61-64) dazu eingerichtet ist, eine Temperatur der MxN Pixelfläche des Ausgabebereichs (21-24) des Bildschirms (20) zu messen.

8. Vorrichtung nach einem der Ansprüche 1 bis 7,
**dadurch gekennzeichnet,**
**dass** die Sicherheitsfunktion ein Ausgeben einer Meldung an einen Benutzer, ein Abschalten des Bildschirms (20) und/oder ein Verblocken einer mit der Vorrichtung (10) gekoppelten Waffe umfasst.

9. Vorrichtung nach einem der Ansprüche 1 bis 8,
**gekennzeichnet durch**
einen zwischen den N1 Kameras (31, 32) und dem Bildschirm (20) geschalteten Übertragungskanal (40) zum Übertragen der Bilddaten (BD1, BD2) von den N1 Kameras zu dem Bildschirm (20), wobei die Integrations-Einheit (43) vor dem Bildschirm (20) in dem Übertragungskanal (40) angeordnet ist.

10. Fahrzeug mit einer Vorrichtung (10) zur validierbaren Ausgabe von Bildern nach einem der Ansprüche 1 bis 9, wobei die N1 von Kameras (31, 32) an einer Außenhaut des Fahrzeugs und der Bildschirm (20) in einem Raum des Fahrzeugs angeordnet sind.

## Claims

1. A device (10) for validatable output of images, comprising:
a screen (20) for outputing images based on extended image data,
a number N1 of cameras (31, 32), where N1 ≥ 1, wherein each of the cameras (31, 32) is configured to provide image data (BD1, BD2) based on a recording of camera images,
an integration unit (43) for outputting extended image data (eBD1, eBD2) based on an integration of a signature (S) visible in the images that are output by the screen (20) into the image data (BD1, BD2) provided by one of the cameras (31, 32),
a number N2 of photosensors (51-54), where N2 ≥ 1, arranged in front of the screen (20), wherein the N2 photosensors (51-54) are configured to detect the integrated signature (S) in the images that are output by the screen (20), and
a validation unit (44) coupled to the N2 photosensors (51-54), which is configured to validate the detected signature (S) and to trigger a safety function depending on the validated signature,
wherein the validation unit (44) is configured to determine a time difference between a second point in time of the detection of the signature (S) by the N2 photosensors (51-54) and a first point in time of the integration of the signature (S) into the provided image data (BD1, BD2) and to trigger the safety function if the determined time difference is greater than a predetermined threshold value, wherein the signature (S) is formed as a coded signature, which comprises a time stamp specific for the integration of the signature (S) into the provided image data (BD1, BD2) for indicating the first point in time and a source indication specific for the camera (31, 32) providing the image data (BD1, BD2),
wherein a number N3 of temperature sensors (61-64) is provided for measuring a respective temperature, where N3 = N2, wherein a respective one of the temperature sensors (61-64) is arranged in front of the screen (20) and next to a respective one of the photosensors (51-54),
wherein the validation unit (44) is configured to validate the detected signature (S) depending on the temperatures measured by the N3 temperature sensors (61-64), and/or wherein the temperature sensors (61-64) are configured to control a heating of the screen (20), which regulates the screen (20) to a setpoint temperature.

2. The device according to claim 1,
**characterized in that**
the respective photosensor (51-54) is configured to monitor a predetermined output area (21-24) of the screen (20) with an MxN pixel area for detecting the signature (S).

3. The device according to claim 2,
**characterized in that**
the pixels of the MxN pixel area of the output area (21-24) have a defined brightness for forming the visible signature (S).

4. The device according to claim 2,
**characterized in that**
the pixels of the MxN pixel area of the output area (21-24) form a predetermined pattern for forming the visible signature (S).

5. The device according to any one of claims 2 to 4,
**characterized in that**
four photosensors (51-54) are provided, where N2 = 4, wherein the respective output area (21-24) monitored by one of the four photosensors (51-54) is located in one of the four corners of the screen (20).

6. The device according to any one of claims 2 to 4,
**characterized in that**
a plurality of photosensors (51-54) is provided, where N2 ≥ 4, wherein the output areas (21-24) monitored by the photosensors (51-54) are located in the vertical and/or horizontal edge areas of the screen (20).

7. The device according to claim 1,
**characterized in that**
the respective temperature sensor (61-64) is configured to measure a temperature of the MxN pixel area of the output area (21-24) of the screen (20).

8. The device according to any one of claims 1 to 7,
**characterized in that**
the safety function comprises outputting a message to a user, switching off the screen (20) and/or blocking a weapon coupled to the device (10).

9. The device according to any one of claims 1 to 8,
**characterized by**
a transmission channel (40) connected between the N1 cameras (31, 32) and the screen (20) for transmitting the image data (BD1, BD2) from the N1 cameras to the screen (20), wherein the integration unit (43) is arranged in front of the screen (20) in the transmission channel (40).

10. A vehicle comprising a device (10) for validatable output of images according to any one of claims 1 to 9, wherein the N1 of cameras (31, 32) are arranged on an outer skin of the vehicle and the screen (20) is arranged in a space of the vehicle.

## Revendications

1. Dispositif (10) pour la sortie validable d'images, comprenant :
un écran (20) pour la sortie d'images sur la base de données d'image étendues,
un nombre N1 de caméras (31, 32), avec N1 ≥ 1, chacune des caméras (31, 32) étant conçue pour fournir des données d'image (BD1, BD2) sur la base d'une capture d'images de caméra,
une unité d'intégration (43) pour la sortie de données d'image étendues (eBD1, eBD2) sur la base d'une intégration d'une signature (S) visible dans les images sorties par l'écran (20) dans les données d'image (BD1, BD2) fournies par l'une des caméras (31, 32),
un nombre N2 de photocapteurs (51-54) disposés devant l'écran (20), avec N2 ≥ 1, les N2 photocapteurs (51-54) étant conçus pour détecter la signature intégrée (S) dans les images sorties par l'écran (20), et
une unité de validation (44) couplée aux N2 photocapteurs (51-54), laquelle est conçue pour valider la signature détectée (S) et pour déclencher une fonction de sécurité en fonction de la signature validée,
l'unité de validation (44) étant conçue pour déterminer une différence de temps entre un deuxième instant de la détection de la signature (S) par les N2 photocapteurs (51-54) et un premier instant de l'intégration de la signature (S) dans les données d'image fournies (BD1, BD2) et pour déclencher la fonction de sécurité si la différence de temps déterminée est supérieure à une valeur seuil prédéfinie, la signature (S) étant réalisée sous forme de signature codée qui comprend un horodatage spécifique à l'intégration de la signature (S) dans les données d'image fournies (BD1, BD2) pour indiquer le premier instant et une indication de source spécifique à la caméra (31, 32) fournissant les données d'image (BD1, BD2),
un nombre N3 de capteurs de température (61-64) étant prévu pour mesurer une température respective, avec N3 = N2, un capteur respectif des capteurs de température (61-64) étant disposé devant l'écran (20) et à côté d'un capteur respectif des photocapteurs (51-54),
l'unité de validation (44) étant conçue pour valider la signature détectée (S) en fonction des températures mesurées par les N3 capteurs de température (61-64), et/ou les capteurs de température (61-64) étant conçus pour commander un chauffage de l'écran (20), lequel régule l'écran (20) à une température de consigne.

2. Dispositif selon la revendication 1,
**caractérisé en ce que**
le photocapteur respectif (51-54) est conçu pour surveiller une zone de sortie prédéfinie (21-24) de l'écran (20) avec une surface de pixels MxN pour la détection de la signature (S).

3. Dispositif selon la revendication 2,
**caractérisé en ce que**
les pixels de la surface de pixels MxN de la zone de sortie (21-24) présentent une luminosité définie pour la formation de la signature visible (S).

4. Dispositif selon la revendication 2,
**caractérisé en ce que**
les pixels de la surface de pixels MxN de la zone de sortie (21-24) forment un motif prédéfini pour la formation de la signature visible (S).

5. Dispositif selon l'une quelconque des revendications 2 à 4,
**caractérisé en ce que**
quatre photocapteurs (51-54) sont prévus, avec N2 = 4, la zone de sortie respective (21-24) surveillée par l'un des quatre photocapteurs (51-54) se trouvant dans l'un des quatre coins de l'écran (20).

6. Dispositif selon l'une quelconque des revendications 2 à 4,
**caractérisé en ce que**
une pluralité de photocapteurs (51-54) est prévue, avec N2 ≥ 4, les zones de sortie (21-24) surveillées par les photocapteurs (51-54) se trouvant dans les zones de bord verticales et/ou horizontales de l'écran (20).

7. Dispositif selon la revendication 1,
**caractérisé en ce que**
le capteur de température respectif (61-64) est conçu pour mesurer une température de la surface de pixels MxN de la zone de sortie (21-24) de l'écran (20).

8. Dispositif selon l'une quelconque des revendications 1 à 7,
**caractérisé en ce que**
la fonction de sécurité comprend une émission d'un message à un utilisateur, une désactivation de l'écran (20) et/ou un blocage d'une arme couplée au dispositif (10).

9. Dispositif selon l'une quelconque des revendications 1 à 8,
**caractérisé par**
un canal de transmission (40) connecté entre les N1 caméras (31, 32) et l'écran (20) pour la transmission des données d'image (BD1, BD2) des N1 caméras à l'écran (20), l'unité d'intégration (43) étant disposée devant l'écran (20) dans le canal de transmission (40).

10. Véhicule comprenant un dispositif (10) pour la sortie validable d'images selon l'une quelconque des revendications 1 à 9, les N1 caméras (31, 32) étant disposées sur un revêtement extérieur du véhicule et l'écran (20) étant disposé dans un espace du véhicule.
